# EUROPÄISCHE PATENTSCHRIFT

(11) **EP 2 571 929 B1**
(45) Veröffentlichungstag und Bekanntmachung des Hinweises auf die Patenterteilung: **02.12.2015**
(21) Anmeldenummer: 11720525.2
(22) Anmeldetag: 20.05.2011
(51) Int. Cl.: C08J 9/00, C08J 9/12

(54) **NANOPORÖSE POLYMERSCHAUMSTOFFE**
NANOPOROUS POLYMERIC FOAM
MOUSSE NANOPOREUSE À BASE DE POLYMÈRE

(30) Priorität: 21.05.2010 EP 10163530
(43) Veröffentlichungstag der Anmeldung: 27.03.2013
(73) Patentinhaber: BASF SE, 67056 Ludwigshafen (DE)
(72) Erfinder: SANDLER, Jan Kurt Walter, 69126 Heidelberg (DE); FRANCIS, Timothy, 68161 Mannheim (DE); SAMPAIO LOPES, Pedro Manuel, 68163 Mannheim (DE)
(86) Internationale Anmeldenummer: PCT/EP2011/058238
(87) Internationale Veröffentlichungsnummer: WO 2011/144728

(56) Entgegenhaltungen:
- WO-A1-2011/112352
- WO-A2-2011/054873
- US-A- 5 158 986
- US-A1- 2009 130 420
- US-A1- 2009 148 665
- FUJIMOTO Y.,RAY S.S., OKAMOTO M., OGAMI A., YAMADA K., UEDA K.: "well controlled biodegradable nanocomposite foams: from microcellular to nanocellular", MACROMOLECULAR RAPID COMMUNICATIONS, Bd. 24, 7. Mai 2003 (2003-05-07), Seiten 457-461, XP002647593,
- ZIRKEL L; JAKOB M; MUNSTEDT H: "Foaming of thin films of a fluorinated ethylene propylene copolymer using supercritical carbon dioxide", JOURNAL OF SUPERCRITICAL FLUIDS, Bd. 49, 1. Mai 2009 (2009-05-01), Seiten 103-110, XP002647594,
- SUN X; LIU H; LI G; LIAO X; HE J: "Investigation on the cell nucleation and cell growth in microcellular foaming by means of temperature quenching", JOURNAL OF APPLIED POLYMER SCIENCE, Bd. 93, 5. Juli 2004 (2004-07-05), Seiten 163-171, XP002647595,

## Beschreibung

Die vorliegende Erfindung betrifft Verfahren zur Herstellung von nanoporösen Polymerschaumstoffen durch Druckentspannung und danach erhältliche nanoporöse Polymerschaumstoffe.

Es ist allgemein bekannt, dass geschäumte Kunststoffe, durch Extrusion von flüchtigen Treibmitteln enthaltenden Schmelzen hergestellt werden können.

So beschreiben M. Lee et al. In "Polymer Engineering and Science, Vol. 38, No. 7, 1998, die Extrusion von geschäumten Polyethylen/Polystyrol-Blends mit superkritischem Kohlendioxid.

Insbesondere im Bereich Wärmedämmung werden Schaumstoffe als Isoliermaterial eingesetzt. Da die mittlere freie Wegstrecke von Luft ungefähr 60 bis 100 Nanometer beträgt (abhängig von Druck und Temperatur), kann daraus geschlossen werden, dass in einem Polymerschaumstoff mit Luft als Zellgas bei einer mittleren Zellgröße von kleiner oder gleich 60 bis 100 Nanometer der Beitrag des Zellgases zur Gesamtwärmeleitung des Schaumstoffs bedeutend reduziert oder sogar völlig eliminiert wird. Daher wären Schaumstoffe mit möglichst kleinzelliger Struktur besonders wünschenswert.

Allerdings gilt es zu beachten, dass nicht nur das Erreichen einer derartigen kleinen Zelldimension wichtig ist, sondern dass auch die Schaumdichte möglichst weit reduziert werden muss, um nicht den über das Zellgas gewonnenen Vorteil durch einen erhöhten Beitrag der polymeren Matrix zur Gesamtwärmeleitung zu verlieren. Dies bedeutet, dass ein nanoporöser Schaumstoff auch eine möglichst geringe Dichte aufweisen muss um eine gegenüber Standard-Polymerschaumstoffen verbesserte thermische Isolierwirkung aufzuweisen.

Hinzu kommt das Problem, dass zwar unmittelbar nach der Schäumung häufig sehr kleine Zellgrößen vorliegen können, dann aber eine Reifung mit der Bildung größerer Zellen eintritt.

In US 5,955,511 und in EP-A 1 424 124 werden beispielhaft Verfahren zur Herstellung mikro- und nanoporöser Polymerschaumstoffe beschrieben, bei denen ein Polymer in einem ersten Schritt bei niedrigen Temperaturen unterhalb der Glasübergangstemperatur des Polymers mit einem Treibmittel unter Druck beladen wird. Dieses beladene Polymer wird anschließend nach Druckentspannung ohne Aufschäumen durch Temperaturerhöhung in einem separaten Schritt geschäumt.

In der WO2008/087559 werden kontinuierliche Extrusionsverfahren zur Herstellung nanoporöser Polymerschaumstoffe beschrieben, bei dem ein Polymer zwar bei unterschiedlichen Temperaturen unter Druck mit dem Treibmittel beaufschlagt wird, der anschließende Schäumprozess durch Druckentspannung aber bei sehr tiefen Temperaturen weit unterhalb der Glasübergangstemperatur des reinen Polymers aber oberhalb der Glasübergangstemperatur des gasbeladenen Systems durchgeführt wird.

In der US2009/0130420 wird ein kontinuierliches Extrusionsverfahren zur Herstellung nanoporöser Polymerschaumstoffe beschrieben, bei dem eine Polymerschmelze unter Druck mit Treibmittel beladen wird und durch anschließende Druckentspannung ebenfalls im Bereich der Glasübergangstemperatur der gasbeladenen Schmelze geschäumt wird. Zwar werden hier hohe Prozessdrücke bis zu 1000 MPa für die Beladung angegeben, allerdings führt die angegebene Druckentspannungsrate von 10 bis 1000 MPa/s in Verbindung mit den tiefen Temperaturen wiederum zu einer vergleichsweise hohen Schaumstoffdichte.

Allerdings weisen die geschilderten Prozesse nicht nur verfahrenstechnische Nachteile auf, auch die Produkteigenschaften zeigen weiteren Bedarf zur Optimierung.

Häufig sind die entstehenden Systeme mikroporös oder makroporös. Dabei bedeutet "mikroporös", dass die Porengrößen im Bereich von 1 bis 1000 Mikrometer liegen. Der Begriff "makroporös" bezeichnet Dimensionen größer als 1000 Mikrometer.

Es ist daher die Aufgabe der vorliegenden Erfindung, Verfahren zur Herstellung von nanoporösen Polymerschaumstoffen mit verbesserten anwendungstechnischen Eigenschaften zu finden, die eine gezielte Einstellung der Zellgröße und der Schaumstoffdichte mit großer und gewünschter Genauigkeit ermöglichen. Weiterhin sollen die Verfahren gegenüber den bekannten Verfahren einfacher durchführbar sein.

Demgemäß wurde ein Verfahren zur Herstellung von nanoporösen Polymerschaumstoffen gefunden, umfassend die Stufen
a) eine Beladung einer aus thermoplastischen Polymeren gebildeten Polymerschmelze mit einem Treibmittel unter einem Druck und bei einer Temperatur, bei dem sich das Treibmittel im überkritischen Zustand befindet,
b) ein Temperieren der beladenen Polymerschmelze auf eine Temperatur welche im Bereich von - 40 bis + 40 °C um die Glasübergangstemperatur des reinen Polymeren liegt,
c) eine Druckentspannung der in Stufe a) beladenen Polymerschmelze mit einer Druckentspannungsrate im Bereich von 15.000 bis 2000.000 MPa/sec erfolgt, und gegebenenfalls
d) Zerkleinern des in Stufe c) erhaltenen nanoporösen Polymerschaumstoffes zu Schaumstoffpartikeln mit einem mittleren Partikeldurchmesser im Bereich von 10 µm bis 10 mm.
Bevorzugte Ausführungsformen des erfindungsgemäßen Verfahrens sind den Unteransprüchen 2 bis 7 zu entnehmen.
Vorzugsweise wird die beladene Polymerschmelze in Stufe a) so temperiert, dass die Temperatur im Moment des Schäumens im Bereich von - 20 bis + 35 °C um die Glasübergangstemperatur der unbeladenen Polymerschmelze liegt. Besonders bevorzugt ist ein Temperaturbereich, der um 0 bis + 30 °C von der Glasübergangstemperatur des reinen Polymers abweicht.

Als Glasübergangstemperatur wird die ermittelbare Glasübergangstemperatur bezeichnet. Die Glasübergangstemperatur kann mittels DSC nach DIN-ISO 11357-2 bei einer Aufheizrate von 20 K/min ermittelt werden.

Mit Hilfe des erfindungsgemäßen Verfahrens werden nanoporöse Polymerschaumstoffe mit einer mittleren Zellzahl im Bereich von 1.000 bis 100.000 Zellen/mm, bevorzugt von 2.000 bis 50.000 und besonders bevorzugt von 5.000 bis 50.000 Zellen/mm, und einer Schaumdichte im Bereich von 10 bis 500 kg/m³, bevorzugt im Bereich von 10 bis 300 kg/m³, besonders bevorzugt im Bereich von 10 bis 250 kg/m³, hergestellt.

Erfindungsgemäß umfasst der Begriff "nanoporös" Porengrößen im Bereich von 5 bis 1000 Nanometern.

Erfindungsgemäß beschreibt der Begriff "mittlere Zellgröße" den mittleren Durchmesser von kreisrunden Schaumzellen mit zu den realen Zellen äquivalenten Querschnittsflächen in typischen Häufigkeits/Größenkurven, wie sie aus Auswertung von mindestens 10 realen Zellflächen von repräsentativen elektronenmikroskopischen Aufnahmen bestimmt werden können.

Erfindungsgemäß beschreibt der Begriff "Schaumdichte" oder auch "Dichte" das Masse zu Volumenverhältnis der geschäumten nanoporösen Formmasse, welche nach der Auftriebsmethode bestimmt werden kann oder sich rechnerisch aus dem Quotient Masse zu Volumen eines Formteils ergibt.

Erfindungsgemäß umfasst der Begriff "Formmasse" oder auch "Polymerschmelze" sowohl reine Homo- als auch Copolymere sowie Mischungen von Polymeren. Des Weiteren beinhaltet der Begriff auch Formulierungen, die auf Polymeren und den unterschiedlichsten Additiven beruhen. Beispielhaft sei hier nur auf Prozessadditive wie zum Beispiel Stabilisatoren, Fließhilfsmittel, Farbadditive, Antioxidantien und ähnliche, dem Fachmann bekannte Additive verwiesen.

Die Schäume können geschlossenzellig sein, sind aber vorzugsweise offenzellig. "Geschlossenzellig" bedeutet, dass eine diskontinuierliche Gasphase und eine kontinuierliche Polymerphase vorliegen.

"Offenzellig" bedeutet, dass es sich um ein bi-kontinuierliches System handelt, in dem die Gasphase und die Polymerphase jeweils kontinuierliche Phasen darstellen, wobei die beiden Phasen interpenetrierende Phasen darstellen.

Die nanoporösen Systeme weisen eine Offenzelligkeit (nach DIN-ISO 4590) von mehr als 40 %, bevorzugt mehr als 50 %, besonders bevorzugt mehr als 75 % auf. Im Idealfall sind mindestens 90 % wenn nicht gar praktisch alle Zellen geöffnet, d.h. das Schaumgerüst besteht nur aus Stegen.

In der ersten Stufe (Stufe a) wird eine polymere Formmasse (Polymerschmelze) mit einem Gas oder einem Fluid als Treibmittel unter einem Druck und einer Temperatur, bei denen sich das Treibmittel im überkritischen Zustand befindet, beladen.

Als thermoplastische Polymere für die Polymerschmelze können beispielsweise Styrolpolymere, Polyamide (PA), Polyolefine, wie Polypropylen (PP), Polyethylen (PE) oder Polyethylen-Propylen-copolymere, Polyacrylate, wie Polymethylmethacrylat (PMMA), Polycarbonat (PC), Polyester, wie Polyethylenterephthalat (PET) oder Polybutylenterephthalat (PBT), Polysulfone, Polyethersulfone (PES), Polyetherketone, Polyetherimide oder Polyethersulfide (PES), Polyphenylenether (PPE) oder Mischungen davon eingesetzt werden. Besonders bevorzugt werden Styrolpolymere, wie Polystyrol oder Styrol-Acrylnitril-Copolymere oder Polyacrylate wie Polymethylmethacrylat eingesetzt.

Als Polymere eigenen sich insbesondre thermoplastisch verarbeitbare amorphe Polymere, in denen nicht mehr als 3 % kristalline Anteile vorliegen (bestimmt durch DSC).

Als Treibmittel eignen sich feste, gasförmige oder flüssige Treibmittel wie Kohlendioxid, Stickstoff, Luft, Edelgase wie beispielsweise Helium oder Argon, aliphatische Kohlenwasserstoffe wie Propan, Butan, teilweise oder vollständig halogenierte aliphatische Kohlenwasserstoffe, wie Fluorkohlenwasserstoffe, Chlorfluorkohlenwasserstoffe, Difluorethan, aliphatische Alkohole oder Distickstoffoxid (Lachgas), wobei Kohlendioxid, Lachgas und/oder Stickstoff bevorzugt werden. Ganz besonders bevorzugt ist Kohlendioxid.

Erfindungsgemäß bedeutet dies, dass das Treibmittel direkt überkritisch dosiert und/oder eingespritzt werden kann, oder die Prozessparameter des zu injizierenden Polymers zum Zeitpunkt der Injektion in einem Bereich liegen, so dass das Treibmittel unter diesen Bedingungen überkritisch wird. Für CO₂ beispielhaft liegt der kritische Punkt bei ungefähr 31°C und 7,375 MPa, für N₂O beispielhaft liegt der kritische Punkt bei ungefähr 36,4°C und 7,245 MPa.

Die Treibmittelbeladung der polymeren Formmasse oder Schmelze kann erfindungsgemäß in einer Druckkammer, z.B. einem Autoklav, oder in einer Werkzeugkavität oder in einem Extruder erfolgen. Erfindungsgemäß unbedeutend ist die genaue Temperatur der polymeren Formmasse in dieser Stufe, wobei eine Temperatur über der kritischen Temperatur des Treibmittels und oberhalb der Glasübergangstemperatur der polymeren Formmasse für diesen ersten Beladungsschritt vorteilhaft ist, da die Aufnahme des Treibmittels über Diffusionsprozesse bei Temperaturen oberhalb der Glasübergangstemperatur der polymeren Formmasse beschleunigt ist und somit kürzere Beladungszeiten möglich sind.

Erfindungsgemäß wird für die Beladung ein Druck oberhalb des kritischen Drucks des Treibmittels eingestellt, bevorzugt größer als 10 MPa, besonders bevorzugt größer als 20 MPa. Dieser Beladungsdruck ist für die Generierung einer möglichst hohen Gaskonzentration in der polymeren Formmasse wichtig, und kann im Rahmen der technischen Möglichkeiten heutiger Druckbehälter bis auf 200 MPa eingestellt werden.

In einer erfindungsgemäßen Variante erfolgt die Beladung in einem Extruder. Bei einer vorteilhaft ausgestalteten Variante ist die Temperatur der polymeren Formmasse im Bereich der Treibmittelinjektion oberhalb der Glasübergangstemperatur der Formmasse, so dass sich das Treibmittel sehr gut und schnell in der Schmelze verteilen und lösen kann. Der Injektionssdruck wird hierbei generell höher eingestellt als der Schmelzedruck in diesem Bereich. In einer besonders vorteilhaften Ausführung wird der Injektionsdruck über ein Druckhalteventil auf einen konstanten hohen Wert eingestellt. Hierbei wird erfindungsgemäß ein Treibmittelmassestrom eingestellt, welcher bezogen auf den Massestrom der polymeren Formmasse 1 bis 60 Gew.-%, insbesondere 5 bis 50 Gew.-% betragen kann. Die Obergrenze für die Treibmittelbeladungstellt hierbei die bei den Parametern Druck und Temperatur der beladenen Schmelze vor der Düse erreichbare Sättigungskonzentration dar, welche entweder empirisch im Prozess oder mittels gravimetrischer Methoden ermittelt werden kann.

In einer zweiten Stufe (Stufe b) der erfindungsgemäßen Verfahren wird nun die beladene polymere Formmasse unter Aufrechterhaltung des Beladungsdrucks größer 10 MPa, bevorzugt größer 20 MPa, auf eine Temperatur abgekühlt, welche zwischen -40 und +40°C, bevorzugt zwischen -20 und +35°C, besonders bevorzugt zwischen 0 und 30°C um die mittels DSC nach DIN-ISO 11357-2 bei einer Aufheizrate von 20 K/min ermittelbare Glasübergangstemperatur der unbeladenen polymeren Formmasse liegt.

In einer erfindungsgemäßen Ausführung des Verfahrens im Autoklav kann diese Anpassung der Temperatur der polymeren Formmasse nach Aufbringen des Beladungsdrucks erfolgen. Alternativ kann diese Temperatur auch bereits vor Aufbringen des Beladungsdruckes eingestellt sein. In beiden Verfahrensvarianten ist auf eine ausreichende Zeit zur Homogenisierung der Temperatur zu achten, insbesondere nach Injektion des kalten Treibmittels in die Kavität. Des Weiteren muss bei diesen Verfahrensvarianten auf eine ausreichende Zeit zum Erreichen der Sättigungskonzentration über Diffusion geachtet werden, insbesondere bei größeren Volumina der polymeren Formmasse.

In einer weiteren erfindungsgemäßen Variante im Extruder wird die beladene Formmasse kontinuierlich abgekühlt. Hierbei können alle dem Fachmann bekannten Apparate von einem Kühlextruder bis hin zu Mischern und Kühlern in beliebiger Anzahl und Kombination eingesetzt werden. Um den Druck in der beladenen Formmasse aufrecht zu erhalten, kann der Einsatz von Schmelzepumpen zur Druckerhöhung angebracht sein, welche ebenfalls in beliebiger Anzahl und Position in den Prozess eingebracht werden können. Hierin liegt auch ein Vorteil der erfindungsgemäßen Ausführung begründet, dass nämlich ein segmenthafter Aufbau der Verfahrensstrecke eine große Kontrolle über die lokalen Parameter Druck und Temperatur bietet und eine schnelle und homogene Abkühlung der beladenen Formmasse unter Druck erfolgen kann. Bedingung ist jedoch, dass durch eine ausreichende Verweilzeit und Durchmischung eine homogene Verteilung der Treibmittelmoleküle erfolgt und das Treibmittel vollständig in der polymeren Formmasse gelöst werden kann.

Überraschenderweise haben experimentelle Arbeiten der Erfinder gezeigt, dass, entgegen allgemeiner Fachmeinungen, eine rapide Druckentspannung einer erfindungsgemäß beladenen und temperierten polymeren Formmasse in der dritten Stufe Stufe c) zu stabilen nanoporösen Polymerschaumstoffen mit geringer Dichte führt.

In einer dritten Stufe (Stufe c) erfolgt eine Druckentspannung der in Stufe a) mit Treibmittel beladenen und in Stufe b) temperierten Polymerschmelze mit einer Druckentspannungsrate im Bereich von 15.000 bis 2.000.000 MPa/sec. Die Druckentspannungsrate bezieht sich auf den Drucksprung, der innerhalb eines Zeitraums von einer Sekunde vor dem Aufschäumen stattfindet. Dabei beträgt der Druckabfall mindestens 10 MPa.

Der Druck vor der Entspannung kann über einen Drucksensor bestimmt werden. Üblicherweise wird auf Athmosphärendruck entspannt. Es kann aber auch ein leichter Überdruck oder Unterdruck angelegt werden. In der Regel erfolgt der Druckabfall sprunghaft innerhalb von 0,1 bis 10 ms. Die Druckentspannungsrate kann beispielsweise durch Anlegen einer Tangente im Bereich des stärksten Druckabfalls im Druck-Temperatur-Diagramm ermittelt werden.

In der kontinuierlichen Ausführungsform mittels Extruder wird die Druckentspannungsrate üblicherweise über die Form der Düse eingestellt. In der Regel wird hierzu eine Düse mit mindestens einem Düsenabschnitt, welcher vorzugsweise eine Länge von 1 bis 5 mm und einen Querschnitt von 0,1 -25 mm² aufweist, verwendet.

Durch Einstellen einer Druckentspannungsrate im Bereich von 15.000 bis 2.000.000 MPa/s, bevorzugt im Bereich von 30.000 bis 1.000.000 MPa/s, besonders bevorzugt im Bereich von 40.000 bis 500.000 MPa/s kann eine polymere Formmasse mit sehr hoher Treibmittelkonzentration und dementsprechend geringer Viskosität auch bei homogenen Schäumtemperaturen oberhalb der Glasübergangstemperatur der nicht-beladenen Formmasse zu einer nanoporösen Schaummorphologie mit gleichzeitig deutlich geringerer Schaumdichte hergestellt werden. Es hat sich gezeigt, dass in einigen Fällen Druckentspannungsraten bis 200.000 MPa/s ausreichend sein können. In diesen Fällen kann das Verfahren vereinfacht ausgeführt werden.

Erfindungsgemäß kann diese dritte Stufe (Stufe c) in den unterschiedlichen Verfahrensvarianten auf unterschiedliche Art und Weise realisiert werden. In einer Variante im Autoklav kann die erfindungsgemäße Druckentspannungsrate wahlweise über schnell schaltende Ventile oder über das kontrollierte Ansprechen von Druckentspannungsvorrichtungen wie zum Beispiel einer Berstscheibe gewährleistet werden. In einer erfindungsgemäßen Variante in einer Werkzeugkavität kann die Druckentspannungsrate über schnelle Vergrößerung der Kavität erfolgen.

In der bevorzugten erfindungsgemäßen Ausführung in einem Extruder wird die Druckentspannungsrate durch die Förderleistung des Extruders sowie die Düsengeometrie gewährleistet.

Weiterhin betrifft die vorliegende Erfindung andere, dem sachkundigen Fachmann geläufige technisch umsetzbare Apparate und Methoden zur Herstellung derartiger nanoporöser Polymerschaumstoffe durch die oben beschriebene erfindungsgemäße rapide Druckentspannung einer erfindungsgemäß temperierten polymeren Formmasse.

Je nach verwendeter Düsengeometrie können besonders im Extrusionsprozess Schaumstrukturen und letztlich Polymerschaumstoffe in verschiedener Gestalt hergestellt werden. In bevorzugten Ausführungen des erfindungsgemäßen Verfahrens werden Vollprofile, beispielsweise Platten oder auch Hohlprofile hergestellt.

In einer ebenfalls bevorzugten Ausgestaltung des erfindungsgemäßen Verfahrens wird der Polymerschaumstoff in einem weiteren Verfahrensschritt (optionale Stufe d) zu Formkörpern in Gestalt von geschäumten Polymerpartikeln, -granulaten, oder -pulvern zerkleinert, z.B. mittels einer Trennscheibe, eines Granulators, einer Klinge, eines Schlagmessers oder einer Mühle. Der Zerkleinerungsschritt kann dabei bevorzugt im direkten Anschluss an die Druckentspannung angeschlossen sein, kann aber auch getrennt zu einem späteren Zeitpunkt durchgeführt werden. Hierbei kann es vorteilhaft sein, den Polymerschaumstoff abzukühlen, beispielsweise mittels Eiswasser, Trockeneis oder flüssigem Stickstoff.

Die Zerkleinerung in Stufe d) kann ein- oder mehrstufig, in letztgenanntem Fall in einer oder in mehreren unterschiedlichen Vorrichtungen erfolgen. Beispielsweise kann der nanoporöse Polymerschaumstoff zunächst einer Vorzerkleinerung und anschließend einer Nachzerkleinerung unterzogen werden. Eine Nachzerkleinerung kann vorteilhafterweise in einer Schneidmühle oder einer Fließbettgegenstrahlmühle erfolgen. Bevorzugt weisen die Schaumstoffpartikeln nach dem Zerkleinern einen mittleren Partikeldurchmesser im Bereich von 10 µm bis 10 mm, besonders bevorzugt im Bereich von 0,1 bis 1 mm auf.

Als Vorrichtung zum Zerkleinern kommen insbesondere Schneckenzerkleinerer, Rotorscheren, Ein- und Mehrwellenzerkleinerer, Walzenmühlen, Feinmühlen, Feinmahlanlagen, Prallscheibenmühlen, Hammermühlen und Fließbettgegenstrahhlmühlen in Betracht.

Verfahren und Vorrichtungen zur Zerkleinerung von organischen Materialien sind dem Fachmann weitläufig bekannt. Der Fachmann wählt eine geeignete Vorrichtung in Abhängigkeit von der zu zerkleinernden Menge, dem erwünschten Durchsatz, der zu erzielenden Partikelgröße und der Sprödigkeit des eingesetzten Materials

Auch die so hergestellten pulver- oder granulatförmigen nanoporösen Polymerschaumstoffe oder Materialien enthaltend die pulver- oder granulatförmigen nanoporösen Polymerschaumstoffe können bevorzugt als Wärmedämmstoffe eingesetzt werden.

Pulverschüttungen für Dämmanwendungen wie z. B. Einblasdämmung sind dem Fachmann bereits bekannt. Organische Materialien in Form von Schäumen konnten jedoch bislang nicht zu Pulver und/oder Schüttungen verarbeitet werden, ohne die günstigen Wärmedämmeigenschaften des zugrundeliegenden porösen Materials negativ zu beeinflussen. Bei den bekannten organischen porösen Materialien erfolgt nach Zerkleinerung eine völlige Zerstörung der Porenstruktur.

Auch bei bekannten anorganischen porösen Materialien lässt sich die Korngröße nicht in ausreichendem Maße frei wählen, was die Anwendbarkeit einschränkt. Beispielsweise fallen pyrogene Kieselsäuren als poröse Materialien in der Regel als Feinstaub an, so dass für viele Anwendungen eine Verpressung und/oder Verklebung erforderlich ist.

Bei der späteren Anwendung sind die auch die Rieselfähigkeit und die niedrige Dichte des nanoporösen Polymerschaumstoffs sowohl in der Schüttung als auch im kompaktierten Zustand ein großer Vorteil. Ein weiterer Vorteil der Schüttungen sind die kontrolliert einstellbaren Partikeldurchmesser sowie deren Größenverteilung durch Wahl des Zerkleinerungsverfahrens.

Die pulver- oder granulatförmigen nanoporösen Polymerschaumstoffe können als solche oder in Mischung mit weiteren funktionalen Komponenten als Wärmedämmstoffe eingesetzt werden. Ein Wärmedämmstoff ist demzufolge eine Abmischung enthaltend die pulver- oder granulatförmigen nanoporösen Polymerschaumstoffe. Die Auswahl geeigneter funktionaler Komponenten als Zusatzstoffe hängt vom Anwendungsgebiet ab.

Die Erfindung betrifft außerdem Baumaterialien und Vakuumisolationspaneele enthaltend die pulver- oder granulatförmigen nanoporösen Polymerschaumstoffe sowie die Verwendung der pulver- oder granulatförmigen nanoporösen Polymerschaumstoffe zur Wärmedämmung. Vorzugsweise werden die erhältlichen Materialien für die Wärmedämmung insbesondere in Bauten, oder zur Kälteisolation insbesondere im mobilen, logistischen oder im stationären Bereich verwendet, zum Beispiel in Kühlgeräten oder für mobile Anwendungen.

Mögliche weitere Komponenten dieser Wärmedämmstoffe sind beispielsweise Verbindungen, die Wärmestrahlen im Infrarotbereich, insbesondere im Wellenlängenbereich zwischen 3 und 10 µm absorbieren, streuen und/oder reflektieren können. Sie werden allgemein als Infrarot-Trübungsmittel bezeichnet. Die Partikelgröße dieser Teilchen beträgt vorzugsweise von 0,5 bis 15 Mikrometer. Beispiele für derartige Substanzen sind insbesondere Titanoxide, Zirkonoxide, Ilmenite, Eisentitanate, Eisenoxide, Zirkonsilikate, Siliciumcarbid, Manganoxide, Graphite und Russ.

Zur mechanischen Verstärkung können Fasern als Zusatzstoffe eingesetzt werden. Diese Fasern können anorganischen oder organischen Ursprungs sein. Beispiele für anorganische Fasern sind vorzugsweise Glaswolle, Steinwolle, Basalt-Fasern, Schlacken-Wolle, keramische Fasern, die aus Schmelzen von Aluminium und/oder Siliciumdioxid sowie weiteren anorganischen Metalloxiden bestehen, und reine Siliciumdioxidfasern wie z. B. Silica-Fasern. Organische Fasern sind vorzugsweise z. B. Cellulosefasern, Textilfasern oder Kunststofffasern. Zum Einsatz kommen folgende Dimensionen: Durchmesser vorzugsweise 1-12 Mikrometer, insbesondere 6-9 Mikrometer; Länge vorzugsweise 1-25 mm, insbesondere 3-10 mm.

Aus technischen und wirtschaftlichen Gründen können der Mischung anorganische Füllmaterialien zugesetzt werden. Zum Einsatz kommen vorzugsweise verschiedene, synthetisch hergestellte Modifikationen von Siliciumdioxid wie z. B. gefällte Kieselsäuren, Lichtbogenkieselsäuren, SiO2-halt Flugstäube, die durch Oxidationen von flüchtigem Siliciummonoxid, bei der elektrochemischen Herstellung von Silicium oder Ferrosilicium entstehen. Ebenso Kieselsäuren, die durch Auslaugen von Silikaten wie Calziumsilikat, Magnesiumsilikat und Mischsilikaten wie z. B. Olivin (Magnesium-Eisensilikat) mit Säuren hergestellt werden. Ferner kommen zum Einsatz natürlich vorkommende SiO2-haltige Verbindungen wie Diatomeenerden und Kieselguren. Ebenfalls können zur Anwendung kommen: thermisch aufgeblähte Mineralien wie vorzugsweise Perlite und Vermiculite. Je nach Bedarf können vorzugsweise feinteilige Metalloxide wie vorzugsweise Aluminiumoxid, Titandioxid, Eisenoxid zugesetzt werden.

Die Abmischung der Wärmedämmstoffe kann generell in diversen Mischaggregaten stattfinden. Bevorzugt kommen jedoch Planetenmischer zur Anwendung. Hierbei ist es vorteilhaft, die Fasern zuerst mit einem Teil der zweiten Mischkomponenten als eine Art Masterbatch vorzumischen, um damit ein vollständiges Aufschließen der Fasern zu gewährleisten. Nach dem Faseraufschluss erfolgt die Zugabe des größten Teils der Mischkomponenten.

Nach Beendigung des Mischprozesses kann das Schüttgewicht der Mischung je nach Art und Menge der Komponenten zwischen vorzugsweise 40-180 kg/m³, bevorzugt 40-120 kg/m³, betragen. Die Rieselfähigkeit der resultierenden porösen Mischung ist sehr gut, so dass sie problemlos und homogen zu Platten verpresst u. a. auch z. B. in die Hohlräume von Hohlbausteinen eingefüllt und verpresst werden kann. Beim Verpressen zu Platten kann durch Festlegung auf bestimmte Plattenstärken, über das Gewicht, die Dichte und infolge dessen auch die Wärmeleitzahl des Dämmstoffes wesentlich beeinflusst werden.

Die in Wärmedämmstoffen verwendeten Materialien kommen vorzugsweise in folgenden Anwendungsgebieten zum Einsatz: als Dämmung in Hohlbausteinen, als Kerndämmung bei mehrschaligen Bausteinen, als Kerndämmung für Vakuumisolationsplatten (VIP), als Kerndämmung für Wärmedämmverbundsysteme (WDVS), als Dämmung bei zweischaligen Mauerwerken, insbesondere im Rahmen der Einblasdämmung.

Ein weiterer Gegenstand der vorliegenden Erfindung sind Vakuumisolationspaneele, welche die pulver- oder granulatförmigen nanoporösen Polymerschaumstoffe enthalten. Darüber hinaus eignen sich die en Wärmedämmstoffe und die pulver- oder granulatförmigen nanoporösen Polymerschaumstoffe insbesondere für die Dämmung von extrudierten Hohlprofilen, insbesondere als Kernmaterial für die Dämmung in Fensterrahmen.

Sehr gute Isolierwirkung zeigen insebsondere die sogenannten Vakuumisolationspaneele, kurz VIP genannt. Mit einer Wärmleitfähigkeit von etwa 0,004 bis 0,008 W/mK (je nach Kernmaterial und Unterdruck), weisen die Vakuumisolationspaneele eine 8 bis 25 mal bessere Wärmdämmwirkung wie konventionelle Wärmedämmsysteme aus. Sie ermöglichen daher schlanke Konstruktionen mit optimaler Wärmdämmung die sowohl im Baubereich als auch im Haushaltsgeräte-, Kühl- und Logistikbereich sowie im Automobil bzw. Fahrzeugbau eingesetzt werden können.

Vakuumisolationspaneele auf Basis poröser Wärmedämmstoffe, Polyurethanschaumplatten und gepressten Fasern als Kernmaterial mit Verbundfolien (z. B. Aluminiumverbundfolien bzw. sog. Metallisierten Folien) sind allgemein bekannt und hinlänglich beschrieben.

Ein weiterer Nachteil heutiger Vakuumisolationspaneele ist die fehlende Kombination aus geringer Wärmeleitfähigkeit bei moderaten Drücken und bei geringen Dichten der Kernmaterialien kleiner 200 kg/m³. Der Einsatz der nanoporösen Polymerschaumstoffe als Kern-Wärmedämmstoff in Vakuumisolationspanelen erlaubt das Einstellen einer optimalen Kombination aus Wärmeleitfähigkeit bei niedrigem Druck, Lebensdauer und geringer Dichte in Abhängigkeit der Parameter Zellgröße und Schaumdichte sowie der eingestellten Partikelgröße und Partikelgrößenverteilung. Als Kernmaterialien eingesetzt werden können die pulver- oder granulatförmigen nanoporösen Polymerschaumstoffe direkt als lose Schüttung oder als verpresste Formkörper.

### Beispiele

### Einsatzstoffe:

| | |
|---|---|
| PMMA 6N: | PMMA Plexiglas 6N von Evonik Röhm GmbH mit einer Glasübergangstemperatur von ca. 102°C (gemessen mit DSC nach ISO 11357-2, Heizrate: 20K/min) |
| PMMA 5N | PMMA Plexiglas 5N von Evonik Röhm GmbH mit einer Glasübergangstemperatur von ca. 98°C (gemessen mit DSC nach ISO 11357-2, Heizrate: 20K/min) |
| PS 156F | Polystyrol Empera 156F der Fa. Ineos Styrencis International SA mit einer Glasübergangstemperatur von 102°C (gemessen mit DSC nach ISO 11357-2, Heizrate: 20K/min) |

### Beispiele 1 - 15 (Autoklav)

Für die folgenden Beispiele wurden die in Tabelle 1 angegebenen Polymeren ein eingesetzt. Nach dem Vortrocknen des Granulats für 3 h bei 80°C im Vakuumschrank wurden ungefähr 200 mg Polymer in Form von Granulaten in einem eigens gefertigten, temperierbaren vertikalen Stahlautoklav mit einem Innenvolumen von ungefähr 2,5 ml auf die im jeweiligen Beispiel genannten Schäumtemperaturen gebracht. Dieser Autoklav ist am oberen Ende mit einem Drucksensor ausgestattet, welcher den Innendruck mit einer Rate von 1/ms misst. Über einen Rechner wurden Druck und Temperatur kontinuierlich aufgezeichnet und konnten anschließend ausgewertet werden.

Hierbei ist zu beachten, dass die Schäumtemperatur als die direkt gemessene Temperatur der unten liegenden Berstscheibe genommen wurde, auf welcher das Polymer lag. Mittels einer automatischen Spindelpressenpumpe (SITEC Modell C) wurde dann das jeweilige Treibmittel im überkritischen Zustand eingepumpt und der jeweilige Beladungsdruck aufgebracht. Zum Ausgleich von Temperaturschwankungen wurde der Druck innerhalb der ersten 2 Stunden nachjustiert bis sich ein stabiler Gleichgewichtszustand und eine stabile Temperatur der Berstscheibe eingestellt hatte.

Um eine ausreichende Zeit für die Aufnahme des Treibmittels über Diffusionsprozesse zu gewährleisten, wurde die Probe für ungefähr 15 bis 24 h unter konstanten Bedingungen gesättigt, auch wenn ein Gleichgewichtszustand schon nach kürzerer Zeit erricht wird.

Für das Schäumen der beladenen und temperierten polymeren Formmasse wurde dann über die Spindelpressenpumpe über einen Zeitraum von wenigen Sekunden der Druck des überkritischen Treibmittels in der Kammer bis zum Erreichen des Versagensdrucks der Berstscheibe erhöht. Die Druckentspannungsrate wurde im Anschluss durch Auswertung der Druckdaten des Sensors ermittelt. Hierbei wurde ein linearer Druckabfall angenommen. Alle Schäumexperimente zeigten einen nahezu vollständigen Druckabfall im Bereich von 2 ms, wobei die für die Zellnukleierung bestimmende Unterschreitung des Sättigungsdrucks noch schneller erfolgte.

Die geschäumte Probe wurde nach dem Austreten aus der Druckkammer durch das sich bildende Loch in der Berstscheibe ca. 50 cm unterhalb der ursprünglichen Position in einem mit Wasser getränkten Schwamm aufgefangen und konnte direkt nach dem Schäumprozess stabil gehandhabt und untersucht werden.

Die Dichte der geschäumten Formkörper wurde nach der Auftriebsmethode bestimmt, während die zellulären Parameter wie der mittlere Zelldurchmesser durch Auswertung von Rasterelektronenmikroskopischen Aufnahmen von mindestens 2 Stellen im Schaum bestimmt wurden. Für die statistische Auswertung wurden Bilder mit mindestens 10 ganzen Zellen im Bildausschnitt herangezogen.

In den Beispielen 1 - 15 wurde jeweils ein optisch homogener, lichtdurchlässiger nanoporöser Schaumstoff mit einer mittleren Dichte im Bereich von 100 - 300 kg/m³ und einem mittleren Zelldurchmesser im Bereich von 40 - 210 nm erhalten. Die Polymerschaumstoffe hatten ein stark bläuliches Erscheinungsbild im Auflicht und schienen leicht rötlich bis transparent im Durchlicht.

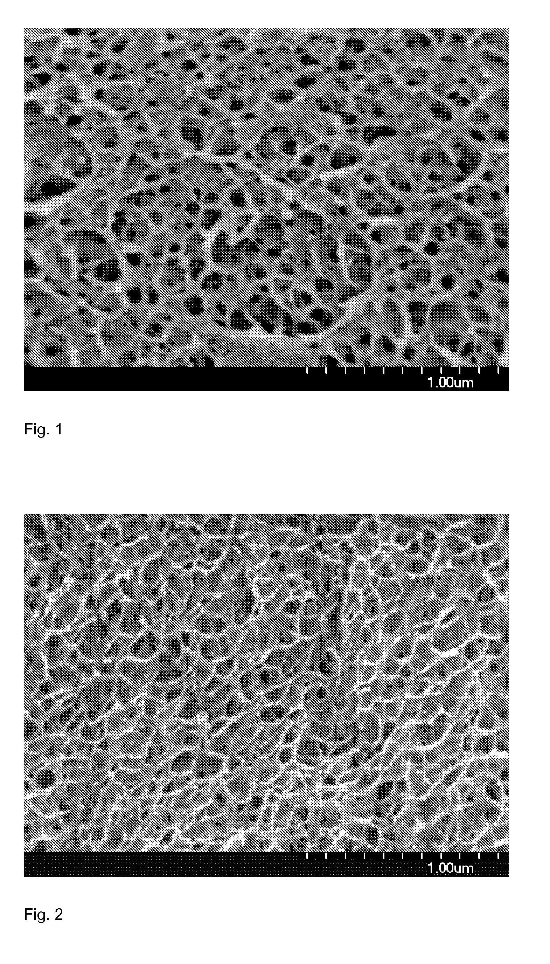

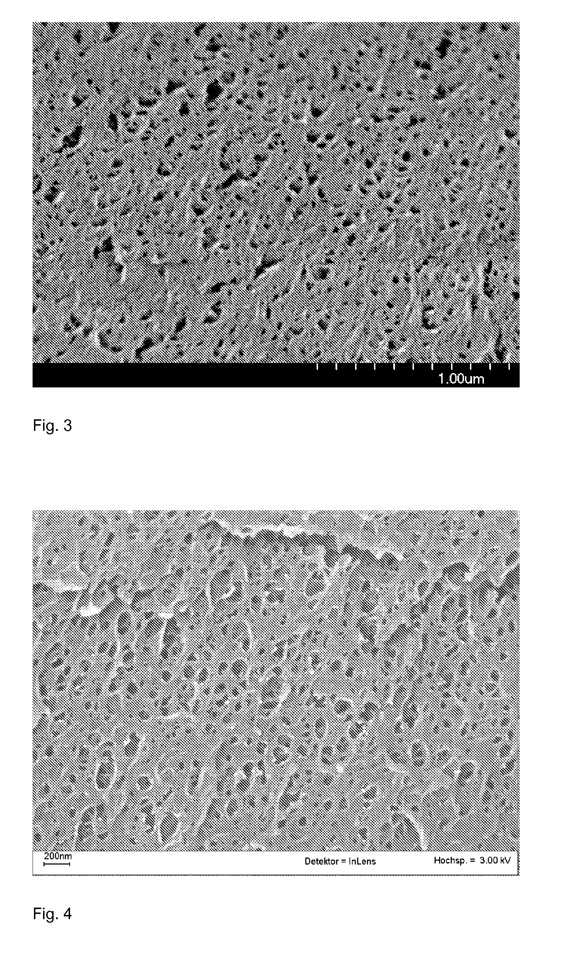

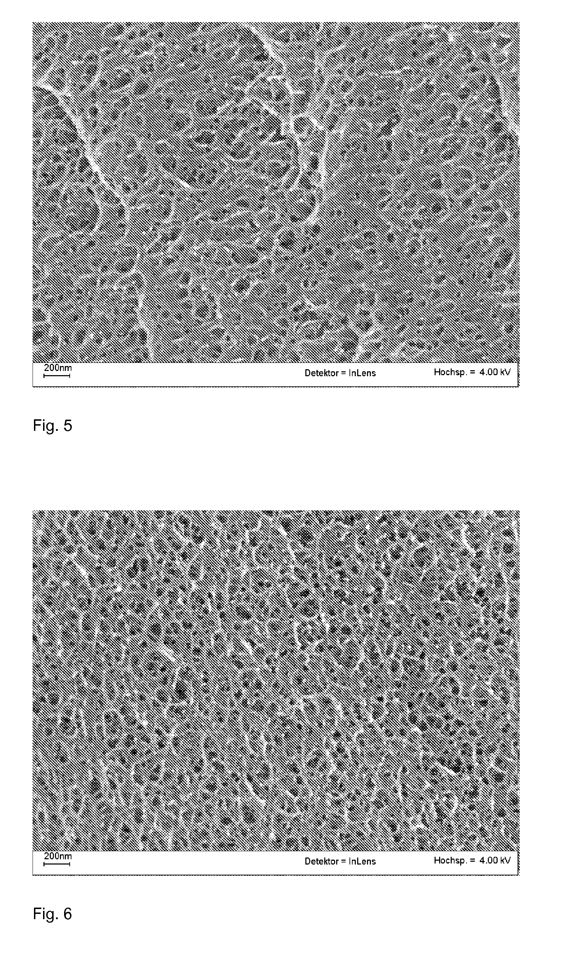

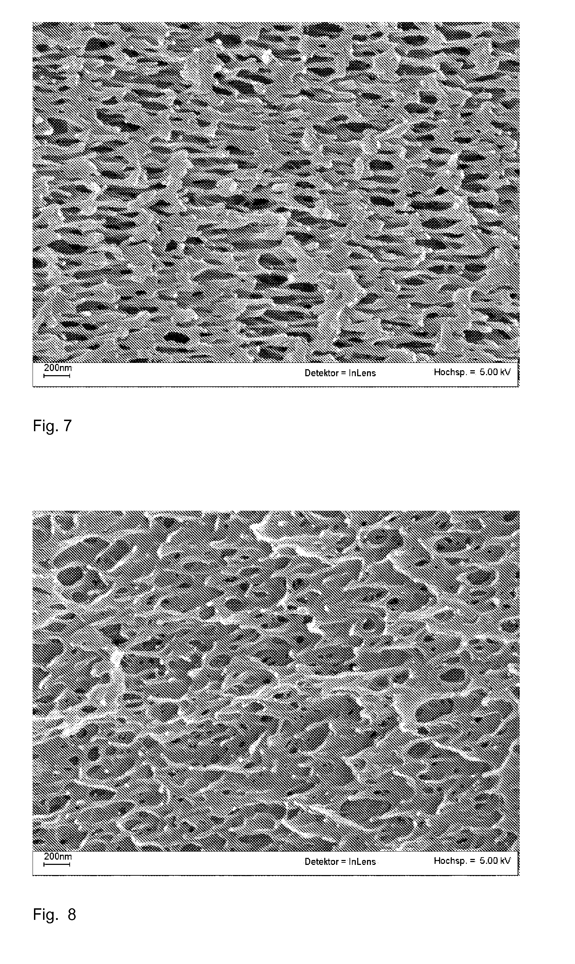

Rasterelektronenmikroskopische Aufnahmen sind in den Figuren 1 - 11 dargestellt.

**Tabelle 1: Verfahrensparameter:**

| Beispiel | Polymer | Treib mittel | Sättigungsdruck [bar] | Temperatur Berstscheibe [°C] | Sättigungs zeit [h] | Versagensdruck [bar] | Druckabfallrate [GPa/s] |
|---|---|---|---|---|---|---|---|
| 1 | PMMA6N | CO2 | 777 | 122 | 22 | 956 | 47 |
| 2 | PMMA6N | CO2 | 758 | 109 | 22 | 847 | 41 |
| 3 | PMMA6N | CO2 | 762 | 95 | 22 | 937 | 46 |
| 4 | PMMA6N | CO2 | 500 | 127 | 22 | 752 | 38 |
| 5 | PMMA6N | CO2 | 400 | 101 | 21 | 803 | 40 |
| 6 | PMMA6N | CO2 | 400 | 87 | 22 | 804 | 26 |
| 7 | PMMA6N | CO2 | 356 | 130 | 22 | 429 | 17 |
| 8 | PMMA6N | N2O | 345 | 130 | 22 | 429 | 18 |
| 9 | PMMA6N | N2O | 707 | 130 | 22 | 827 | 41 |
| 10 | PMMA5N | CO2 | 750 | 85 | 22 | 850 | 42 |
| 11 | PMMA5N | CO2 | 735 | 105 | 22 | 923 | 46 |
| 12 | PMMA5N | CO2 | 750 | 123 | 22 | 897 | 45 |
| 13 | PS 156F | CO2 | 600 | 129 | 15 | 750 | 37 |
| 14 | PS 156F | CO2 | 700 | 128 | 19 | 769 | 38 |
| 15 | PS 156F | CO2 | 750 | 129 | 18 | 805 | 40 |

**Tabelle 2: mittlere Dichte und mittlerer Zelldurchmesser der nanoporösen Schaumstoffe der Beispiele 1 - 15**

| Beispiel | Mittlere Dichte [kg/m³] | Mittlerer Zelldurchmesser [nm] | Figur |
|---|---|---|---|
| 1 | 150 | 100 | 1 |
| 2 | 180 | 85 | 2 |
| 3 | 230 | 40 | 3 |
| 4 | 195 | 120 | 4 |
| 5 | 220 | 100 | 5 |
| 6 | 300 | 70 | 6 |
| 7 | 230 | 150 | 7 |
| 8 | 125 | 140 | 8 |
| 9 | 150 | 85 | |
| 10 | 270 | 80 | 10 |
| 11 | 214 | 100 | |
| 12 | 160 | 130 | |
| 13 | 220 | 210 | |
| 14 | 192 | 180 | |
| 15 | 189 | 150 | 11 |

### Beispiel 16 (Extruder)

In einer bevorzugten erfindungsgemäßen Ausführung wurde ein nanoporöser Polymerschaumstoff mit niedriger Dichte in einem kontinuierlichen Extrusionsverfahren hergestellt.

Hierbei wurde als polymere Formmasse ein PMMA Plexiglas 6N der Firma Evonik Röhm GmbH wie geliefert eingesetzt. In Stufe 1 wurde die polymere Formmasse in einem Extruder (Leistritz 18 mm) bei einem Durchsatz von 2,26 kg/h aufgeschmolzen und homogenisiert. Im direkten Anschluss an die Plastifizierung der polymeren Formmasse wurde überkritisches CO2 mit einem Druck von ungefähr 475 bar in die Formmasse bei einer Schmelzetemperatur von ca. 220°C injiziert. Hierfür wurde ein Massestrom von ungefähr 0,780 kg/h CO2 eingestellt, woraus sich eine Beladung von ungefähr 34,5 Gew.% bezogen auf die Masse Polymer ergibt.

Die beladene Formmasse wurde dann über Misch- und Kühlelemente auf eine Temperatur von ca. 103°C vor der Düse abgesenkt. Der Druck entlang der Prozessstrecke nach der Treibmittelinjektion wurde durch Einsatz von Schmelzepumpen über einem Mindestwert von 350 bar gehalten.

Durch Extrusion der beladenen Formmasse unter diesem Druck und diesem Gesamtmassestrom durch eine Runddüse mit 0,5 mm Durchmesser und einer Länge von 1,8 mm konnte eine erfindungsgemäße Druckentspannungsrate im Bereich von 80.000 MPa/s der erfindungsgemäß temperierten polymeren Formmasse eingestellt werden.

Es ergab sich in diesem Verfahren ein kontinuierlich extrudierter optisch homogener, lichtdurchlässiger nanoporöser Polymerschaumstoff mit einer mittleren Schaumdichte von ungefähr 200 kg/m³ und einem mittleren Zelldurchmesser von ungefähr 100 nm. Der Polymerschaumstoff hatte ein bläuliches Erscheinungsbild im Auflicht und schien leicht rötlich im Durchlicht.

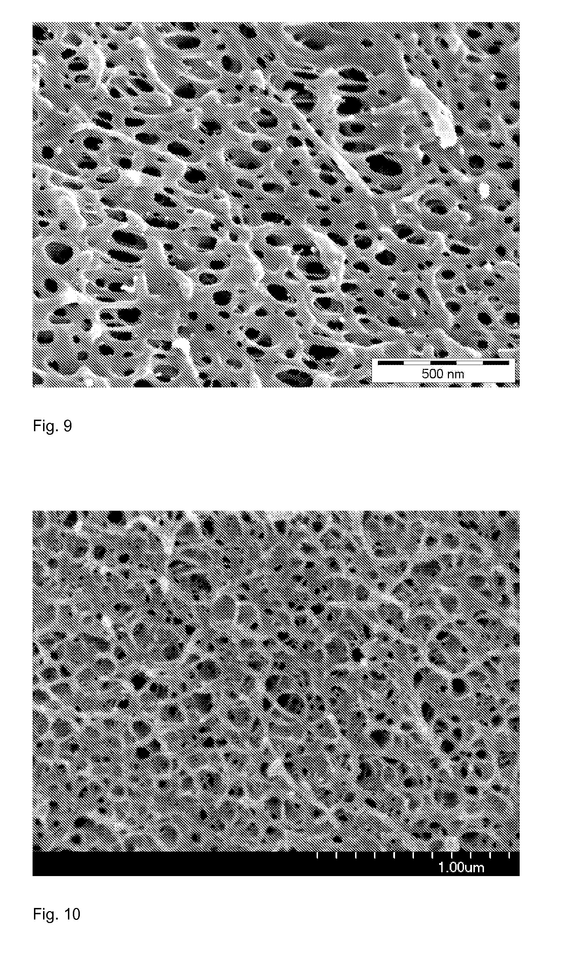

Eine Rasterelektronenmikroskopische Aufnahme des nanoporösen Schaumstoffs aus Beispiel 16 ist in Figur 9 dargestellt.

### Beispiel 17 (Extruder)

In einer weiteren bevorzugten erfindungsgemäßen Ausführung wurde ein nanoporöser Polymerschaumstoff mit niedriger Dichte in einem kontinuierlichen Extrusionsverfahren hergestellt.

Hierbei wurde wiederum als polymere Formmasse ein PMMA Plexiglas 6N der Firma Evonik Röhm GmbH wie geliefert eingesetzt. In Stufe 1 wurde die polymere Formmasse in einem Extruder (Leistritz 18 mm) bei einem Durchsatz von 1,8 kg/h aufgeschmolzen und homogenisiert. Im direkten Anschluss an die Plastifizierung der polymeren Formmasse wurde überkritisches CO2 mit einem Druck von ungefähr 470 bar in die Formmasse bei einer Schmelzetemperatur von ca. 220°C injiziert. Hierfür wurde ein Massestrom von ungefähr 0,745 kg/h CO2 eingestellt, woraus sich eine Beladung von ungefähr 41,4 Gew.% bezogen auf die Masse Polymer ergibt.

Die beladene Formmasse wurde dann über Misch- und Kühlelemente auf eine Temperatur von ca. 100°C vor der Düse abgesenkt. Der Druck entlang der Prozessstrecke nach der Treibmittelinjektion wurde durch Einsatz von Schmelzepumpen über einem Mindestwert von 375 bar gehalten.

Durch Extrusion der beladenen Formmasse unter diesem Druck und diesem Gesamtmassestrom durch eine Runddüse mit 0,3 mm Durchmesser und einer Länge von 1,57 mm konnte eine Druckentspannungsrate im Bereich von 270.000 MPa/s der temperierten polymeren Formmasse eingestellt werden.

Es ergab sich in diesem erfindungsgemäßen Verfahren ein kontinuierlich extrudierter optisch homogener, lichtdurchlässiger nanoporöser Polymerschaumstoff mit einer mittleren Schaumdichte von ungefähr 180 kg/m³ und einem mittleren Zelldurchmesser von ungefähr 90 nm. Der Polymerschaumstoff hatte ein bläuliches Erscheinungsbild im Auflicht und schien leicht rötlich im Durchlicht.

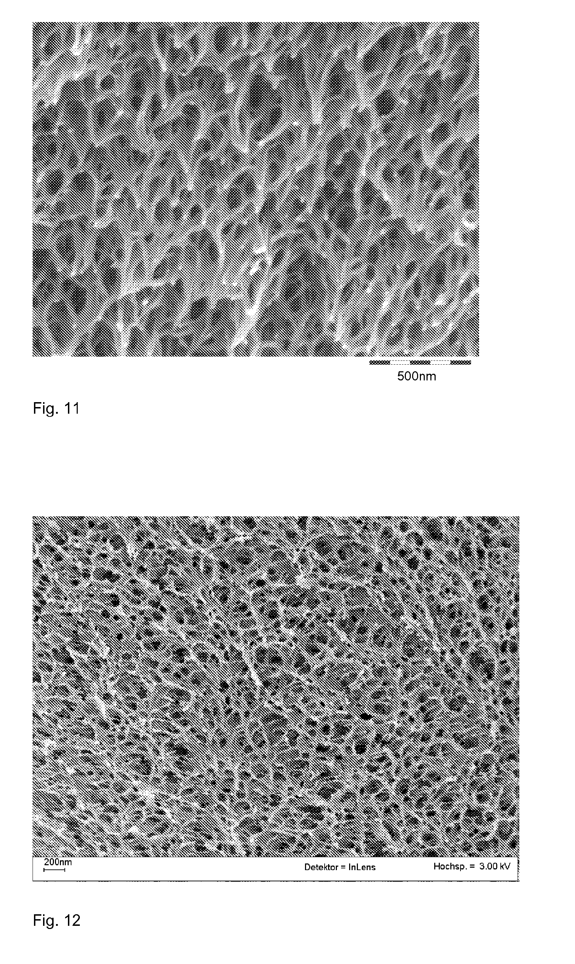

Eine Rasterelektronenmikroskopische Aufnahme des nanoporösen Schaumstoffs aus Beispiel 17 ist in Figur 12 dargestellt.

## Patentansprüche

1. Verfahren zur Herstellung von nanoporösen Polymerschaumstoffen, umfassend die Stufen
a) Beladung einer aus thermoplastischen Polymeren gebildeten Polymerschmelze mit einem Treibmittel unter einem Druck und bei einer Temperatur, bei dem sich das Treibmittel im überkritischen Zustand befindet,
b) Temperieren der beladenen Polymerschmelze auf eine Temperatur, im Bereich von 40 C unter bis 40°C über der mittels DSC nach DIN-ISO 11357-2 bei einer Aufheizrate von 20 K/min ermittelbaren Glasübergangstemperatur der unbeladenen Polymerschmelze liegt,
c) Druckentspannung der in Stufe a) beladenen und in Stufe b) temperierten Polymerschmelze mit einer Druckentspannungsrate im Bereich von 15.000 bis 2.000.000 MPa/sec.

2. Verfahren nach Anspruch 1, **dadurch gekennzeichnet, dass** die Beladung und die Temperierung der Polymerschmelze kontinuierlich in einem Extruder durchgeführt werden und die Druckentspannung über eine Düse erfolgt.

3. Verfahren nach Anspruch 1 oder 2, **dadurch gekennzeichnet, dass** Polystyrol, Polymethylmethacrylat (PMMA), Polycarbonat, Styrol-Acrylnitril-Copolymere, Polysulfone, Polyethersulfon, Polyetherimid oder Mischungen davon als thermoplastisches Polymer eingesetzt wird.

4. Verfahren nach Anspruch 3, **dadurch gekennzeichnet, dass** die beladene Polymerschmelze in Stufe b) auf eine Temperatur im Bereich von 50 bis 250°C temperiert wird.

5. Verfahren nach einem der Ansprüche 1 bis 3, **dadurch gekennzeichnet, dass** der der Druck in Stufe a) im Bereich von 20 bis 200 MPa und nach der Druckentspannung im Bereich von 0,01 bis 1 MPa (absolut) liegt.

6. Verfahren nach einem der Ansprüche 1 bis 5, **dadurch gekennzeichnet, dass** als Gas Kohlendioxid (CO₂) oder Distickstoffoxid (N₂O) eingesetzt wird.

7. Verfahren nach einem der Ansprüche 1 bis 6, **dadurch gekennzeichnet, dass** es zusätzlich eine Stufe
d) Zerkleinern des in Stufe c) erhaltenen nanoporösen Polymerschaumstoffes zu Schaumstoffpartikeln mit einem mittleren Partikeldurchmesser im Bereich von10 µm bis 10 mm, umfasst.

## Claims

1. A process for the production of nanoporous polymer foams, comprising the stages
a) loading of a polymer melt formed from thermoplastic polymers with a propellant under a pressure and at a temperature at which the propellant is in the supercritical state,
b) heating of the laden polymer melt to a temperature which lies in the range from 40°C under to 40°C over the glass transition temperature of the unladen polymer melt determinable by DSC according to DIN-ISO 11357-2 at a heating rate of 20 K/min,
c) depressurization of the polymer melt laden in stage a) and heated in stage b) with a depressurization rate in the range from 15,000 to 2,000,000 MPa/sec.

2. The process according to claim 1, wherein the loading and the heating of the polymer melt are performed continuously in an extruder and the depressurization is effected via a nozzle.

3. The process according to claim 1 or 2, wherein polystyrene, polymethyl methacrylate (PMMA), polycarbonate, styrene-acrylonitrile copolymers, polysulfones, polyether sulfone, polyether imide or mixtures thereof are used as the thermoplastic polymer.

4. The process according to claim 3, wherein the laden polymer melt is heated in stage b) to a temperature in the range from 50 to 250°C.

5. The process according to one of claims 1 to 3, wherein the pressure lies in the range from 20 to 200 MPa in step a) and in the range from 0.01 to 1 mPa (absolute) after the depressurization.

6. The process according to one of claims 1 to 5, wherein carbon dioxide (CO₂) or dinitrogen oxide (N₂O) is used as the gas.

7. The process according to one of claims 1 to 6, wherein it additionally comprises a stage
d) comminuting the nanoporous polymer foam obtained in stage c) to foam particles having an average particle diameter in the range from 10 µm to 10 mm.

## Revendications

1. Procédé de fabrication de mousses polymères nanoporeuses, comprenant les étapes suivantes :
a) le chargement d'une masse fondue polymère formée par des polymères thermoplastiques avec un agent gonflant à une pression et une température auxquelles l'agent gonflant se trouve à l'état supercritique,
b) le traitement thermique de la masse fondue polymère chargée à une température dans la plage allant de 40 °C en dessous à 40 °C au-dessus de la température de transition vitreuse pouvant être déterminée par DSC selon DIN-ISO 11357-2 à une vitesse de chauffage de 20 K/min de la masse fondue polymère non chargée,
c) la détente de la masse fondue polymère chargée à l'étape a) et traitée thermiquement à l'étape b) à une vitesse de détente dans la plage allant de 15 000 à 2 000 000 MPa/s.

2. Procédé selon la revendication 1, **caractérisé en ce que** le chargement et le traitement thermique de la masse fondue polymère sont réalisés en continu dans une extrudeuse et la détente a lieu par une buse.

3. Procédé selon la revendication 1 ou 2, **caractérisé en ce que** du polystyrène, du polyméthacrylate de méthyle (PMMA), du polycarbonate, des copolymères de styrène-acrylonitrile, des polysulfones, de la polyéthersulfone, du polyéther-imide ou leurs mélanges sont utilisés en tant que polymère thermoplastique.

4. Procédé selon la revendication 3, **caractérisé en ce que** la masse fondue polymère chargée est traitée thermiquement à l'étape b) à une température dans la plage allant de 50 à 250 °C.

5. Procédé selon l'une quelconque des revendications 1 à 3, **caractérisé en ce que** la pression à l'étape a) se situe dans la plage allant de 20 à 200 MPa et, après la détente, dans la plage allant de 0,01 à 1 MPa (absolu).

6. Procédé selon l'une quelconque des revendications 1 à 5, **caractérisé en ce que** du dioxyde de carbone (CO₂) ou de l'oxyde de diazote (N₂O) est utilisé en tant que gaz.

7. Procédé selon l'une quelconque des revendications 1 à 6, **caractérisé en ce qu'**il comprend en outre une étape
d) le broyage de la mousse polymère nanoporeuse obtenue à l'étape c) en particules de mousse ayant un diamètre de particule moyen dans la plage allant de 10 µm à 10 mm.
